# EUROPÄISCHE PATENTANMELDUNG

(11) **EP 1 862 216 A1**
(43) Veröffentlichungstag der Anmeldung: **05.12.2007**
(21) Anmeldenummer: 06011318.0
(22) Anmeldetag: 01.06.2006
(51) Int. Cl.: B01J 21/16, B01J 23/54, B01J 35/02, B01J 37/00

(54) **Katalysatorkörper und Herstellungsverfahren**

(71) Anmelder: Faber-Castell AG, 90547 Stein (DE)
(72) Erfinder: Appel, Reiner, 90522 Oberasbach (DE); Lugert, Gerhard, Dr., 90431 Nürnberg (DE); Krasnikov, Nikolaj, 90513 Zirndorf (DE)
(74) Vertreter: Mörtel & Höfner

(57) **Zusammenfassung**

Die Erfindung bezieht sich auf einen Katalysatorkörper mit einer porösen Matrix aus gebranntem Ton, wobei in der Matrix oder auf deren Oberfläche eine Katalysatorsubstanz vorhanden ist.

## Beschreibung

Zielsetzung der vorliegenden Erfindung ist die Herstellung von Katalysatorkörpern, insbesondere von Katalysatorstäbchen, wobei vor allem letztere die folgenden Eigenschaften besitzen sollten:

Stäbchen mit hexagonalem, trigonalem, rechteckigem bzw. quadratischem Profil, bevorzugt jedoch rundem Profil. Bei den hergestellten Stäbchen wird eine sehr hohe Maßgenauigkeit, insbesondere in Bezug auf den Durchmesser erwartet. Hierbei ist als Abweichung innerhalb eines Produktionsbatches eine maximale Abweichung von +/- 0,03 mm.

*Zielsetzung:* Innerhalb der Katalysatorkörper bzw. -Stäbchens soll eine möglichst hohe Oberfläche vorhanden sein, die durch eine poröse Struktur herbeigeführt werden soll, um Gase bzw. gasförmige Verbindungen innerhalb des Katalysatorkörpers und auf dessen äußeren und inneren Oberflächen zur Reaktion gelangen zu lassen.

Die Temperaturstabilität der erhaltenen Katalysatorkörper bzw. -Stäbchen sollte mehrere 100°C betragen, wobei in Einzelfällen Temperaturstabilitäten bis ca. 1000°C erwartet werden. Innerhalb der Zusammensetzung der Stäbchen sollten Metalle, Metalloxide oder auch Metallkomplexverbindungen eingebracht werden können, an deren Oberfläche katalytische Reaktionen ablaufen.

Es sollte darüber hinaus möglich sein, eine Dotierung der Katalysatorkörper mit Spuren bzw. geringen Mengen von Edelmetallen bzw. Edelmetallverbindungen vornehmen zu können.

Die Herstellung der Katalysatorkörper, insbesondere der Katalysator-Stäbchen sollte im Zuge einer Massenproduktion kostengünstig möglich sein.

Die zu Katalysatorkörper sollten für vielfältige katalytische Reaktionen eingesetzt werden können. Eine bevorzugte Anwendung von stäbchenförmigen Katalysatorkörpern ist jedoch innerhalb von Brennstoffzellen möglich, wobei sowohl eine Eignung für Niedertemperatur-Brennstoffzellen, als auch für Hochtemperatur- Brennstoffzellen Teil der Entwicklungszielsetzung war.

Eine Lösung der geforderten Entwicklung wurde durch Mischungen aus Ton, welcher sich durch Zugabe von Wasser plastisch verhält, zusammen mit Metalloxiden und/oder Metallen ermöglicht. Zu der Mischung werden gegebenenfalls Additive wie Netzmittel oder auch zusätzliche Bindemittel wie Cellulosederivate oder Polyvinylalkohole zugesetzt.

Die eingesetzten Bindemittel sollten in jedem Fall eine gute Quellbarkeit in Wasser bzw. Wasserlöslichkeit besitzen und durch einen keramischen Brand aus den Katalysatorstäbchen entfernbar sein.

Die Herstellung, im folgenden wird auf Katalysator-Stäbchen bezug genommen, erfolgt über eine Mischung der Komponenten, zusammen mit Wasser in Schnellmischern oder Knetern. Nach einer Homogenisierung des Materials werden daraus Stäbchen auf Strangpressen, wie sie in der Bleistiftindustrie Verwendung finden, oder aber auch auf Ein- oder Zweischneckenextrudern ausgeformt. Hierbei ist es auch möglich den Stäbchen ein rundes Profil, sternförmige Profile (letztere besitzen eine zusätzliche Erhöhung der Oberfläche), oder aber auch rechteckige, quadratische, hexagonale, pentagonale oder andersartige Profile während der Extrusion herbeizuführen.

Die nassen Katalysatorenstäbchen werden im Falle von runden, zylinderförmigen Stäbchen, zunächst in Rundbüchsen getrocknet. Im Falle quadratischer, pentagonaler, hexagonaler Profile kann auch eine statische Trocknung erfolgen, wobei darauf zu achten ist, dass sich die Stäbchen hierbei nicht biegen.

Im Falle von runden Stäbchen erfolgt ein Trocknen in Rundbüchsen in Umluftschränken bei Temperaturen bis 130°C über 4-6 Stunden hinweg. Nach Trocknen der Katalysatorstäbchen erfolgt ein keramischer Brand bei 600 bis 1000°C. Wobei je nach Metall, Komplexverbindung oder Metalloxid sowohl unter reduzierenden oder oxidierenden Bedingungen gebrannt werden kann. Es ist aber in speziellen Fällen auch denkbar, einen Brand in Inertgas vorzunehmen.

Die erhaltenen Stäbchen weisen in jedem Fall ein hohes Porenvolumen auf und außerdem die geforderte große Dimensionsstabilität sowie Temperaturstabilität. Diese Bedingungen sind insbesondere bei Verwendung in Hochtemperaturbrennstoffzellen, in welchen Temperaturen von ca. 650°C (MCFC) bis ca. 1000°C (SOFC) auftreten können.

Ein hohes Porenvolumen wird zum einen dadurch erreicht, dass das ursprünglich vorhandene Wasser, welches in Prozentsätzen von 20 bis 40 % innerhalb der nassen Katalysatorenmischung vorliegt, innerhalb des Trockenprozesses entfernt wird. Zum anderen werden zugesetzte Bindemittel und auch organische Additive während des keramischen Brandes zersetzt, wodurch ein weiteres Porenvolumen entsteht.

Eine weitere Erhöhung eines Porenvolumens kann durch Zusätze weiterer organischer, aber auch anorganischer Verbindungen (z. B. Carbonate) entstehen.

Eine Dotierung mit zusätzlichen oberflächenaktiven Substanzen kann zum einen dadurch erfolgen, dass bereits geringe Mengen, z. B. an Edelmetallen wie Platin, Palladium oder Gold bereits der eingesetzten Rohmaterialmischung vor dem eigentlichen Knetprozess erfolgen. Es ist jedoch auch möglich die vorhandenen Katalysatorenstäbchen, die ein großes Porenvolumen aufweisen, im Nachhinein durch Eintauchen in z. B. wässerige Lösungen, die lösliche Komplexverbindungen, oder Edelmetallsalze enthalten, zu dotieren. Das vorhandene Wasser kann im Anschluss an diese Behandlung durch Trocknen entfernt werden.

Als Basis für eine Rezepturzusammensetzung kann von folgender Beispielrezeptur ausgegangen werden:

| | |
|---|---|
| 1. Ton | 10 - 60 Gew% |
| 2. Additive | 1 - 15 Gew% |
| 3. Metalle oder Metalloxide | 30 - 80 Gew% |
| 4. Edelmetalldotierungen | 0 - 10 Gew% |

### Zu einer Konkretisierung sollen 2 Beispiele angeführt werden:

### Zusammensetzung für ein nickeloxidhaltiges Katalysatorstäbchen:

Eine Mischung von
- 40 g Ton (Klingenberger Bleistiftton)
- 2 g Polyphosphat
- 2 g Genapol PF 80 (Clariant AG)
- 1 Gew% Methylhydroximethylcellulose (Walocel MW 400)
- 55 Gew% Nickeloxid

Die vorhandenen Materialien werden in einem Kneter zunächst trocken gemischt. Nach kurzer Mischzeit wird Wasser zugegeben bis der Gesamtwassergehalt 30 Gew% beträgt. Die vorhandene Mischung wird 3 - 4 Stunden geknetet. Das daraus erhaltene plastische Material wird auf Strangpressen unter Anwendung hoher Drücke in Stäbchen mit einem Durchmesser von 2,1 mm extrudiert. Die erhaltenen, runden flexiblen Stäbchen werden auf 180 mm Länge geschnitten und in runde Büchsen eingelegt. Unter Drehbewegungen werden die Katalysatorstäbchen in Umrollschränken bei ca. 110°C über 6 Stunden hinweg getrocknet. Die erhaltenen Stäbchen werden darauf hin unter Verwendung einer oxidierenden Flamme bei 650°C gebrannt. Am Ende werden zylindrische Stäbchen erhalten, die einen Durchmesser von 2,00 mm aufweisen. Diese können dann als Katalysatorstäbchen für Hochtemperaturbrennstoffzellen wie
z. B. Schmelzcarbonatbrennstoffzellen (MCFC) verwendet werden, wobei die Verwendung der nickeloxidhaltigen Katalysatorstäbchen im Bereich der Kadodenseite zur Verwendung gelangen kann.

Entsprechend ist es auch möglich einen nickelhaltigen Katalysator für die Anodenseite zu verwenden. Dieser kann in analoger Weise zu Beispiel 1 hergestellt werden. Es ist jedoch beim keramischen Brand darauf zu achten, dass bei Verwendung von Nickel auf oxidierende Bedingungen verzichtet wird. In diesem Fall kann mit Inertgas oder unter reduktiven Bedingungen ein keramischer Brand erfolgen.

Statt der Verwendung von toxikologisch bedenklichem Nickeloxid ist es auch möglich Nickelcarbonat innerhalb Beispiel 1 einzusetzen. Dieses zersetzt sich bei der vorgenommenen Brenntemperatur zu Nickeloxid. Außerdem würde hierdurch auch eine weitergehende Erhöhung des vorhandenen Porenvolumens innerhalb des Katalysatorstäbchens ermöglicht werden.

### Beispiel 2:

Herstellung von Katalysatorstäbchen, die Platinpulver enthalten. Hierzu werden
- 45 g Ton
- 2 g Polyphosphat
- 2 g Genapol PF 80
- 1 g Polyvinylalkohol *zusammen mit*
- 49 g Graphit *gemischt*

Außerdem wird 0,1 g feinpulverisiertes Platin nach Zugabe von 50 g Wasser gemischt. Eine Homogenisierung erfolgt in einem Kneter.

Im Anschluss daran werden rechteckige Stäbchen ausgepresst. Diese werden innerhalb von Zwingen in einem Umluftofen bei 130°C getrocknet. Die Abmessung der Stäbchen beträgt 5 x 5 mm bei einer Länge von 240 mm.

Im Anschluss erfolgt bei 750°C ein keramischer Brand unter reduzierender Flamme. Auch in diesem Beispiel wird durch das verdunstete Wasser sowie das vorhandene Bindemittel und Genapol PF 80, welche durch den keramischen Brand zersetzt werden, Porenvolumen innerhalb der Stäbchen frei. Es entsteht ein graphit-, platinhaltiger Katalysator, welcher für Phosphorsäurebrennstoffzellen (PAFC) Verwendung finden kann.

Es besteht auch die Möglichkeit statt des eingesetzten Graphites Ruß einzusetzen. Das heißt, sowohl eine partielle Substitution des Graphites, als auch vollständige Substitution von Graphit durch Ruß ist denkbar.

## Patentansprüche

1. Katalysatorkörper mit einer porösen Matrix aus gebranntem Ton, wobei in der Matrix oder auf deren Oberfläche eine Katalysatorsubstanz vorhanden ist.

2. Katalysatorkörper nach Anspruch 1,
**dadurch gekennzeichnet,**
**dass** als Katalysatorsubstanz ein Metall, ein Metalloxid, eine Metallkomplexverbindung oder eine Mischung dieser Substanzen vorhanden ist.

3. Katalysatorkörper nach Anspruch 1 oder 2,
**dadurch gekennzeichnet,**
**dass** der 10 bis 60 Gew.% Ton, 30 bis 90 Gew.% Katalysatorsubstanz und 1 bis 15 Gew.% Additive enthält.

4. Katalysatorkörper nach Anspruch 3,
**dadurch gekennzeichnet,**
**dass** er 30 bis 80 Gew.% wenigstens einer Katalysatorsubstanz aus der Gruppe Metalle, Metalloxide und Metallkomplexverbindungen enthält.

5. Katalysatorkörper nach Anspruch 3 oder 4,
**dadurch gekennzeichnet,**
**dass** er bis zu 10 Gew.% Edelmetalle enthält.

6. Katalysatorkörper nach einem der vorhergehenden Ansprüche,
**dadurch gekennzeichnet,**
**dass** er stäbchenförmig ausgebildet ist.

7. Verwendung eines Katalysatorkörpers nach einem der vorhergehenden Ansprüche für eine Brennstoffzelle.

8. Verfahren zur Herstellung stäbchenförmiger Katalysatorkörper nach einem der Ansprüche 1 bis 6,
**dadurch gekennzeichnet,**
**dass** ein Tonmaterial mit Wasser und gegebenenfalls von Additiven zu einer Ausgangsmasse vermischt, aus der Ausgangsmasse Katalysatorkörper, insbesondere in Stäbchenform, extrudiert werden, wobei diese zunächst getrocknet und anschließend gebrannt werden.

9. Verfahren nach Anspruch 8,
**dadurch gekennzeichnet,**
**dass** bei der Trocknung von Stäbchen mit rundem Querschnitt eine Vielzahl von Stäbchen in einen zylindrischen Behälter angeordnet werden, wobei der Behälter während des Trocknens um eine Längsachse gedreht wird.

10. Verfahren nach Anspruch 9,
**dadurch gekennzeichnet,**
**dass** die Katalysatorkörper bzw. Stäbchen bei einer Temperatur von 550 bis 700 °C gebrannt werden.

11. Verfahren nach einem der vorhergehenden Ansprüche, bei dem der Ausgangsmasse ein in Wasser quellbares oder wasserlösliches Bindemittel zugesetzt wird.

12. Verfahren nach Anspruch 11,
**dadurch gekennzeichnet,**
**dass** ein Bindemittel zugesetzt wird, das sich bei den während des Brennens der Stäbchen vorherrschenden Temperaturen zersetzt.

13. Verfahren nach Anspruch 12,
**gekennzeichnet durch**
die Verwendung von Cellulosederivaten und/oder Polyvinylalkoholen als Bindemittel.

14. Verfahren nach einem der vorhergehenden Ansprüche,
**dadurch gekennzeichnet,**
**dass** der Ausgangsmischung ein Stoff zugesetzt wird, der bei den Brenntemperaturen ein Gas abspaltet.

15. Verfahren nach einem der vorhergehenden Ansprüche,
**dadurch gekennzeichnet,**
**dass** der Ausgangsmischung eine Katalysatorsubstanz beigemengt wird.

16. Verfahren nach einem der vorhergehenden Ansprüche,
**dadurch gekennzeichnet,**
**dass** die gebrannten Katalysatorkörper bzw. -Stäbchen in eine wässrige, Katalysatorsubstanz enthaltende Zubereitung getaucht und anschließend getrocknet werden.
